# EUROPEAN PATENT APPLICATION

(11) **EP 2 325 781 A1**
(43) Date of publication of application: **25.05.2011**
(21) Application number: 11157979.3
(22) Date of filing: 31.01.2008
(51) Int. Cl.: G06K 19/06

(54) **Graphic Code Application Apparatus and Method**

(30) Priority: 02.02.2007 GB 0702092
(62) Divisional of application: 08101171.0
(71) Applicant: Fracture Code Corporation ApS, 2770 Kastrup (DK)
(72) Inventor: Rasmussen, Jens Jacob Juul, 2900 Hellerup (DK); Pinchen, Stephen Paul, Kirk Langley, Derbyshire DE6 4NS (GB)
(74) Representative: McCartney, Jonathan William

(57) **Abstract**

A machine readable code comprises at least a portion of a graphical indicium, the graphical indicium comprising a random arrangement of spots. At least some of the spots comprising the graphical indicium may have a dimension of less than one micrometre. The spots comprising the graphical indicium may vary in size and/or shape. The portion of the graphical indicium comprising the code may be delimited by a boundary, the boundary may be a temporary boundary which may be generated by a reading machine relative to a fixed trigger point only when the code is being read. Alternatively, the portion of the graphical indicium comprising the code may be delimited by a graphically represented boundary.

## Description

The present invention relates to graphical indicia that are suitable for encoding in order to produce a unique machine-readable code.

Codes that are graphically represented and machine-readable are well-known. Such codes are commonly used on consumer goods and commercial products and when read may provide information relating to the cost, line item, or origin of the product, for example. These types of codes may be used for automating check-outs at supermarkets, for stock control purposes or for verifying the correct product is in the correct packaging. More complex machine-readable codes of this type can be used as a security feature on certain consumer products such as pharmaceuticals, alcohol, tobacco and the like or for documents of high value such as currency, bonds, tax stamps, travel documents and identification cards to prevent counterfeiting, pass-off and diversion. There are a number of different types of code formats that are commonly in use, these include alphanumerics, linear barcodes, and two-dimensional barcodes. However, these types of codes are relatively simple to copy or replicate. It may also be possible to guess the next code within a sequence since the algorithms used to generate such codes are in the public domain. Also, information is encoded within the code, and even if the data is encrypted, the information can be derived from the code without reference to any database. The data may be used or manipulated for unauthorised purposes which greatly reduces the effectiveness of the code as a security or track and trace device.

One sophisticated type of machine-readable code is described in our UK Patent no GB 2383878 (the entire contents of which are incorporated herein by reference) and commercially available under the trademark FractureCode (RTM). Advantages of this type of code over other commercial machine-readable codes include the ability to generate a very high number of random unique codes. This makes the code exceptionally difficult to copy, and it is not possible to guess an authentic code. Another major advantage is that the code itself carries no data and no data is required to generate the code at the time the code is printed. This renders the codes meaningless until the moment they are used. These codes are therefore exceptionally secure and are ideal for tracking and tracing products and documents.

Although a high population of possible distinct codes can be produced, in order to guarantee the very high population of unique codes, the codes are usually formed as composite indicia and as such comprise two or more co-located simple indicia. This means that an article, or its packaging, which is to be marked must have a first indicium followed by a second indicium applied to its surface. Special rotary printing presses are required for this procedure to be carried out and such machines can be very expensive, and can restrict the type of products and materials which can be printed.

It is therefore desirable to provide a machine-readable code having a high population of possible distinct codes that may be applied to a wide-range of substrates of different materials as well as to products such as, metal or plastic caps, glass or plastic bottles or vials, and engineered components, quickly and as cheaply as possible.

According to a first aspect of the present invention there is provided a machine readable code comprising at least a portion of a graphical indicium, the graphical indicium comprising a random arrangement of spots.

At least some of the spots comprising the graphical indicium may have a dimension of less than one micrometre. The spots comprising the graphical indicium may vary in size and/or shape.

The portion of the graphical indicium comprising the code may be delimited by a boundary. The boundary may be a temporary boundary which may be generated by a reading machine relative to a fixed trigger point only when the code is being read. Alternatively, the portion of the graphical indicium comprising the code may be delimited by a graphically represented boundary.

According to a second embodiment of the invention there is provided a method of associating data with an article comprising the steps of: applying a graphical indicium comprising a random arrangement of spots to the article; acquiring electronically an image of at least a portion of the graphical indicium; processing the acquired image to produce a descriptor; assigning data to the descriptor; and, storing the association in a storage means.

The graphical indicium may be applied by spraying. Further, the graphical indicium may be applied directly to the surface of the article. Alternatively, the graphical indicium may be applied to a substrate which is applied to the surface of the article.

A portion of the acquired image of the graphical indicium may be processed to produce the descriptor. The portion may be delimited by a boundary which may be a temporary boundary that is generated by the machine relative to a fixed trigger point only when the graphical indicium is being processed.

According to a third aspect of the present invention there is provided an apparatus for associating data with an article the apparatus comprising: an application unit for applying to the article a graphical indicium comprising a random arrangement of spots; a camera for acquiring electronically an image of at least a portion of the graphical indicium; a processor for processing the acquired image to produce a descriptor; an assignment means for assigning data to the descriptor; and, a storage means for storing the association.

The application unit may comprise a spray nozzle. The apparatus may further include a window calculation unit for defining a portion of the graphical indicium to be processed by the processor. Additionally, the apparatus may further include a detection unit for detecting a fixed trigger point for defining the position of the portion of the graphical indicium relative to it.

The spots may comprise dots or other marks which may be of any shape.

The graphical indicium may be unique and may be abstract.

The invention may comprise any combination of the features and/or limitations referred to herein, except combinations of such features as are mutually exclusive

Embodiments of the present invention will now be described, by way of example, with reference to the accompanying drawings, in which:
Figure 1 shows a code according to a first embodiment of the invention;
Figure 2 shows a printing machine for applying a graphical indicium for the code of Figure 1;
Figure 3 shows schematically an apparatus for assigning data to a code;
Figure 4 shows schematically an apparatus for reading a code;
Figure 5 shows a code according to a second embodiment of the invention.
Figure 6 shows a printing machine for applying a graphical indicium to a continuous web;
Figure 7 shows a printing machine for applying a graphical indicium to a web of paper during the paper manufacture process;
Figure 8 shows a printing machine for applying a graphical indicium to individual sheets of a substrate;
Figure 9 shows a printing machine for applying a graphical indicium to a portion of an article;
Figure 10 shows a further printing machine for applying a graphical indicium to a portion of an article;
Figure 11 shows a printing machine for applying a graphical indicium to a portion of a label for application to an article; and
Figure 12 shows a printing machine for applying a graphical indicium to portions of glass bottles.

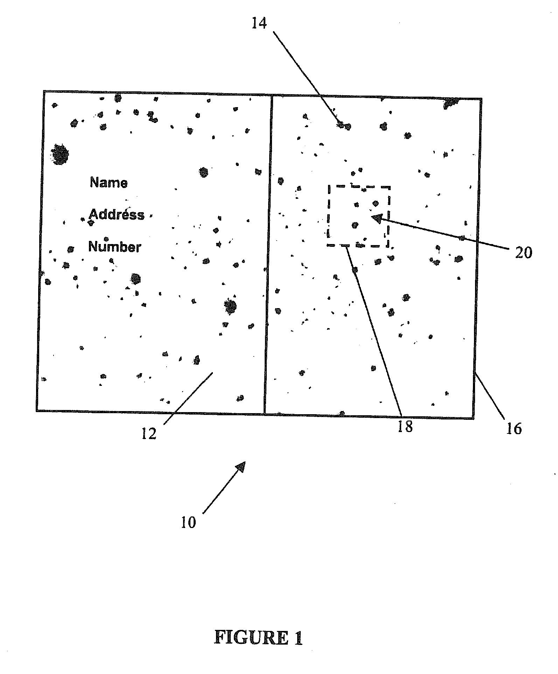

**Figure 1** shows an article 10, in the form of a mailing label, having a graphical indicium 14 over its surface 12. The graphical indicium 14 is in the form of spots or dots that vary in size and shape and are distributed randomly on the surface. The graphical indicium 14 is applied by spraying the surface 12 of the substrate from which the article is to be made, prior to its manufacture. The surface 12 can be sprayed with either conventional inks or covert inks, such as those that are detectable only when illuminated, or irradiated, with light in a certain frequency range. Ink spraying naturally produces a constantly varying unique graphical indicium 14. Further, there are multiple factors that affect the type of graphical indicium 14 produced by spraying including: the temperature of the ink, the type of substrate being sprayed, the viscosity of the ink, the pressure of the ink, the type of spraying nozzle, the number of nozzles, the arrangement of the nozzles and the speed the substrate is moving at whilst it is being sprayed.

The size of the dots can vary greatly but at least some of them are less than one micrometre and hence are known as "nano dots". The size of the smallest dots that can be printed using conventional printing techniques such as flexography, rotogravure, letterpress or lithography is between 5-10 micrometres. This means that it is impossible to reproduce accurately the graphical indicium 14 by printing. Accurate copying and reproduction of the graphical indicium 14 for example by photocopying or scanning, is also impossible. Since the patterns produced by spraying are entirely random it is not possible to reproduce a specific graphical indicium 14 by carrying out this technique. It is therefore difficult to see how the graphical indicium 14 could be reproduced accurately at all.

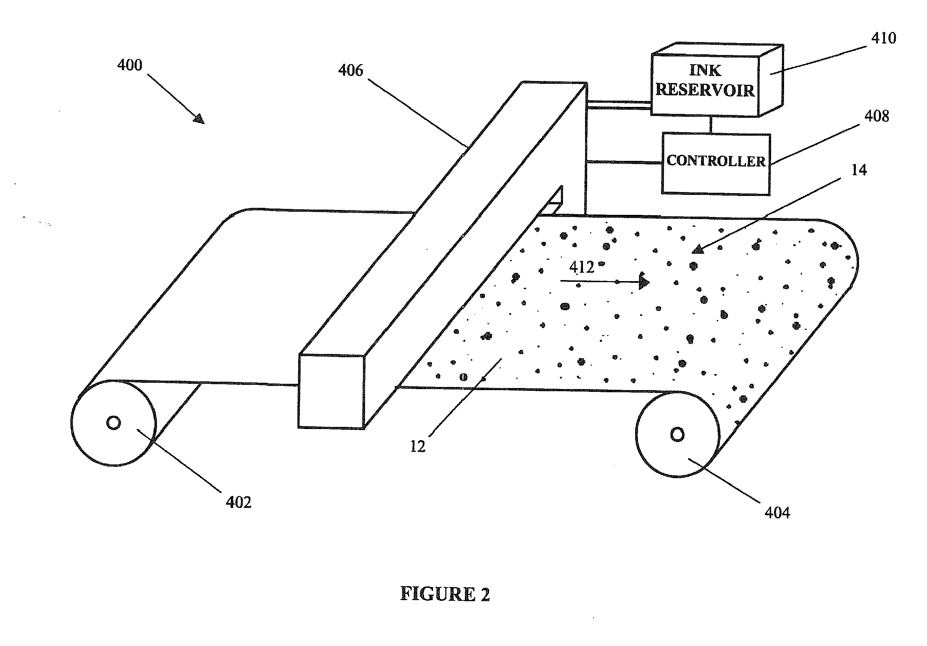

The graphical indicium 14 may be applied to a web of the article substrate 12 before any other information has been printed onto its surface 12 or any article made from it. **Figure 2** shows an apparatus 300 suitable for this. The apparatus comprises an unwind roller 302, a rewind roller 304, a spray unit 406, a controller 308 and an ink reservoir 310. A web of the article substrate 12 unwound from the unwind roller 302, becomes sprayed and is then rewound onto the rewind roller 304. Between the unwind and rewind rollers 302, 304 is a spray unit 306. The spray unit 306 comprises a number of spray nozzles that are fed with pressurised ink from the ink supply 310. The controller 308 controls the spraying operation in relation to the speed of the substrate 12. As the substrate 12 passes through the spray unit 306 a random, constantly varying pattern of dots 14 is applied in the web direction 312 over the whole surface or part of the surface where the spray nozzles are directed. This results in a web of substrate 12 having a random, meaningless graphical indicium 14 over its surface. The graphical indicium 14 can be applied very cheaply, quickly and simply and is naturally unique. The web of substrate 12 is then treated according to a conventional production and can for example be printed with text and/or graphics and cut into distinct articles, each article having a unique graphical pattern 14 over a portion of its surface 12.

The random arrangement of sprayed dots on the substrate can be used as a graphical, machine readable code.

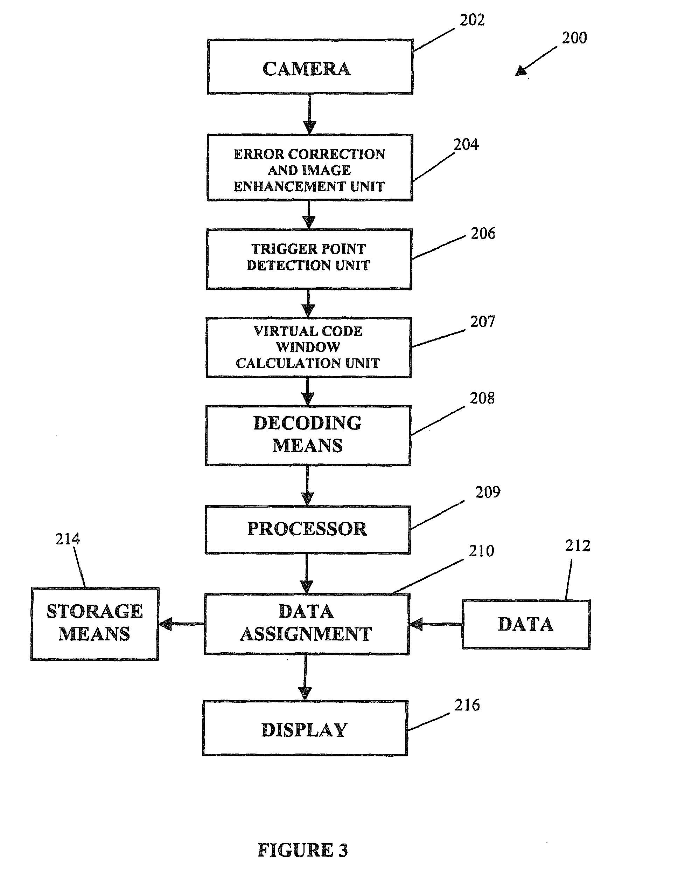

**Figure 3** shows a schematic diagram of an apparatus 200 for reading the coding dots 14, encoding a portion of them and assigning data thereto. A camera 202 acquires an image of the coding dots 14. The acquired image is error-corrected and enhanced electronically in an error correction and image enhancement unit 204. The detection unit 206 then detects a pre-determined trigger point 16 which in this example is the bottom right-hand corner of the article. Based on pre-defined co-ordinates, a virtual code window 18 of a specified size and shape is then created around a portion of the coding dots 14 relative to the trigger point 16 by a window calculation unit 207. The co-ordinates of the virtual code window 18 relative to the trigger point 16 are defined by the machine 200 and the position of the virtual code window is therefore the same for every article 10 that is scanned. However, the pattern of the coding dots 14 within the virtual window 18 is unique for each article. The decoding means 208 then processes the code 20, which is the portion of the coding dots 14 delimited by the virtual code window 18, and the processor 209 applies an algorithm to produce a numeric or alphanumeric descriptor 22 related to the dots. A data assignment unit 210 then obtains data 212 to be assigned to the particular article 10, assigns it to the alphanumeric descriptor 22 and stores this association in a storage means 214. The data 212 and alphanumeric descriptor 22 may be displayed on a display means 216.

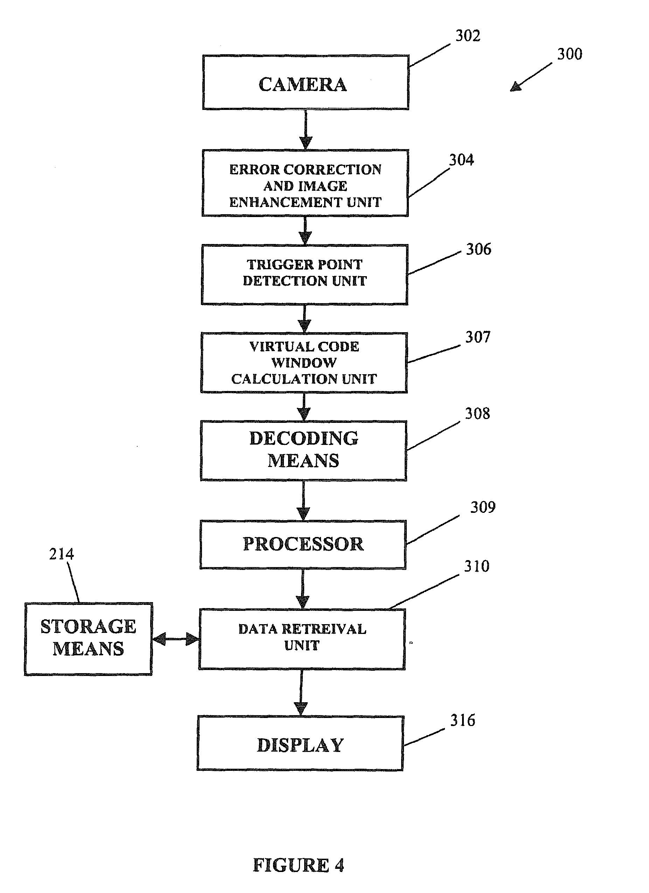

**Figure 4** schematically shows a hand-held reading apparatus 300 for reading the code 20 on an article 10. A camera 302 acquires an image of the coding dots 14 and the acquired image is error-corrected and enhanced electronically in an error correction and image enhancement unit 304. The detection unit 306 detects the pre-determined trigger point 16 and the window calculation unit 307 creates the virtual code window 18 of a specified shape and size relative to it based on the pre-defined coordinate information stored in the reader 300. The virtual code window 18 is in the same position as when the article was initially scanned. The decoding means 308 then processes the code 20, which is the portion of the coding dots 14 delimited by the virtual code window 18, and the processor 309 applies an algorithm to produce a descriptor 22. A data retrieval unit 310 then obtains data associated with the descriptor 22 from the storage means 214 on which data was stored during the encoding process. The display means 316 then displays the data relating to the scanned article 10.

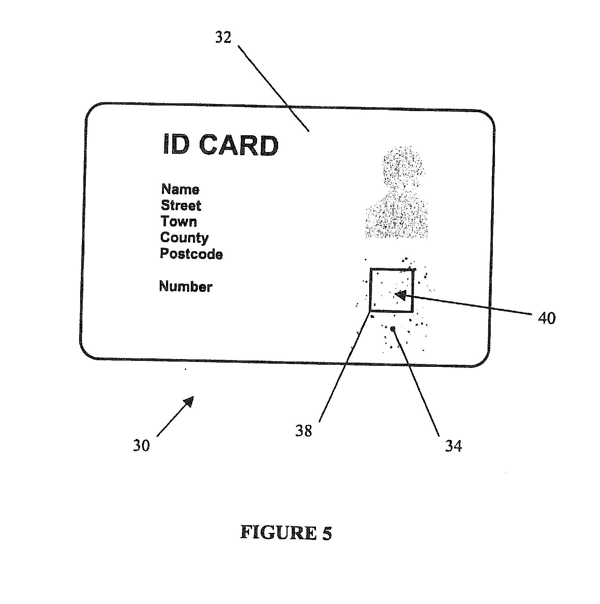

**Figure 5** shows a second embodiment of the invention. An article 30, in the form of an identification card, has a graphical indicium 34 over only a small portion of its surface 32. Similarly to the first embodiment, the graphical indicium 34 is in the form of dots that vary in size and shape and are spaced randomly. The dots are applied to the surface 32 of the card 30 by spot spraying which yields an area of graphical indicium dependent on the distance the spray head is from the surface 32 and the pressure used to generate the spray. Due to the random nature of the spray pattern produced, each article has a unique pattern of dots 34 on its surface. Printed over the graphical indicium 34 is a rectangular box 38. This window 38 delimits a portion of the dots which can then be encoded and used as a code 40.

The code 40 may be assigned data by the apparatus as shown in Figure 3 and as described for the first embodiment. A difference is that the camera 202 visually detects the code window 38 as opposed to it being defined by the virtual code window calculation unit 207 relative to a fixed trigger point. The code 40 may be read using the apparatus shown in Figure 4 and as described for the first embodiment, the difference being that the camera 302 visually detects the code window 38, as opposed to it being defined by the virtual code window calculation unit 307.

The coding dots 14, 34 may be overprinted with graphics, text and/or another machine readable code. Machine readable codes include alphanumeric codes, linear barcodes and two-dimensional barcodes. Alternatively, graphics, text and/or a machine readable code may be printed on an article and coding dots 14, 34 may be sprayed over them.

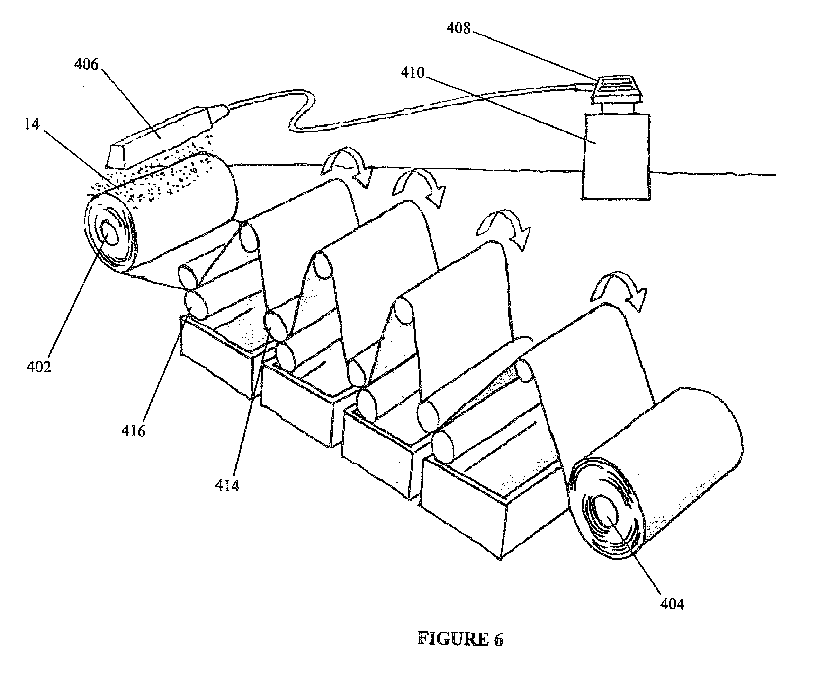

**Figure 6** shows an apparatus for printing text and graphics onto a web of paper and then spraying coding dots 14 onto the web. This spraying process can take place either just before the web is printed or just after the web has been printed. The web of paper is guided by a number of rollers 414 and the surface of the paper is printed using a number of print cylinders 416. Once the web has been printed it is sprayed with unique coding dots 14 by a spray nozzle 406 which is connected to an ink reservoir 410 controlled by a controller 408.

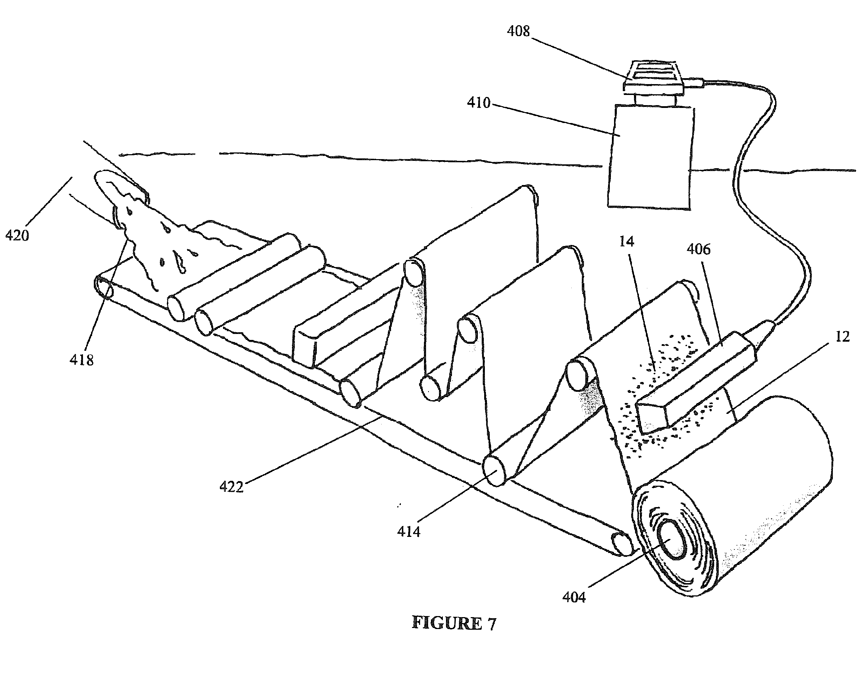

**Figure 7** shows an apparatus for applying coding dots 14 to a web of paper during the paper manufacturing process. Paper slurry 418 is fed onto the machine using a chute 420 and onto a conveyor belt 422 where the slurry is squeezed and water is evaporated from the slurry 418 guided by a number of rollers 414. Unique coding dots 14 are then applied to the dried paper surface 12 by a spray nozzle 406 before it is wound into a roll 404 for later use in a wide range of packaging materials.

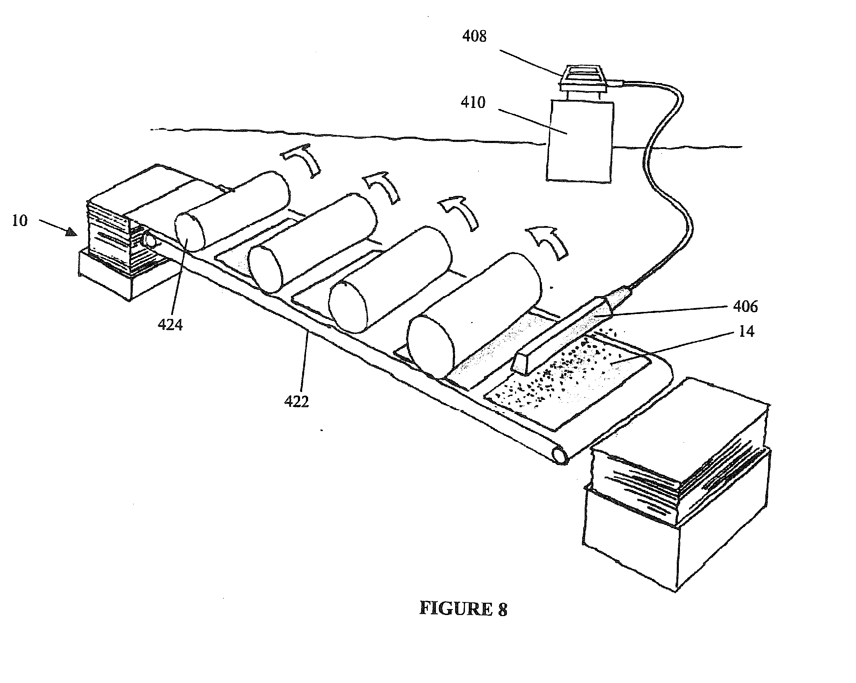

**Figure 8** shows an apparatus for applying coding dots 14 to a stack of articles 10. The articles 10 are fed one-by-one onto a conveyor belt 422 and are guided by rollers 424. The articles reach a spray nozzle 406, which is connected to an ink reservoir 410, and unique coding dots 14 are applied to the surface 12 of the articles 10. The articles are then restacked at the end of the conveyor belt 422.

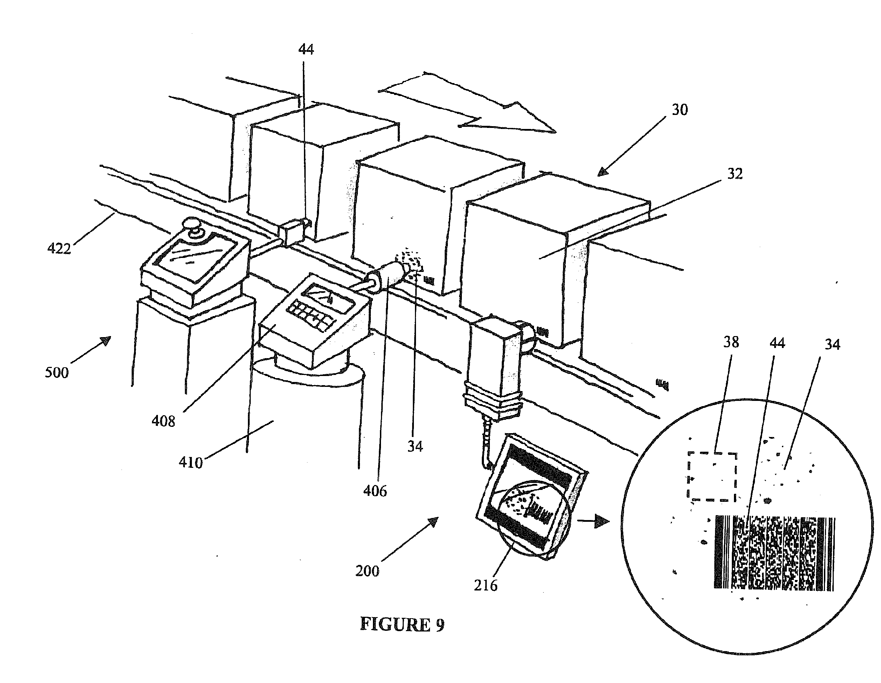

**Figure 9** shows an apparatus for applying a machine-readable code 24 and unique coding dots 34 to the surface 12 of an article 10. The articles 10 move along a conveyor belt 422 and first a machine 500 prints a 2D barcode 24 to the surface of the article. A second machine then applies unique coding dots 34 on the surface of the article in the region of the barcode 24. The dots 14 are applied by a spray nozzle 406 which is connected to a controller 408 and an ink reservoir 410. The coding dots 34 and the barcode 24 are then read by an encoding apparatus 200 where data is assigned to the a portion 40 of the coding dots 34. This may be based on or have some relation to the barcode 24.

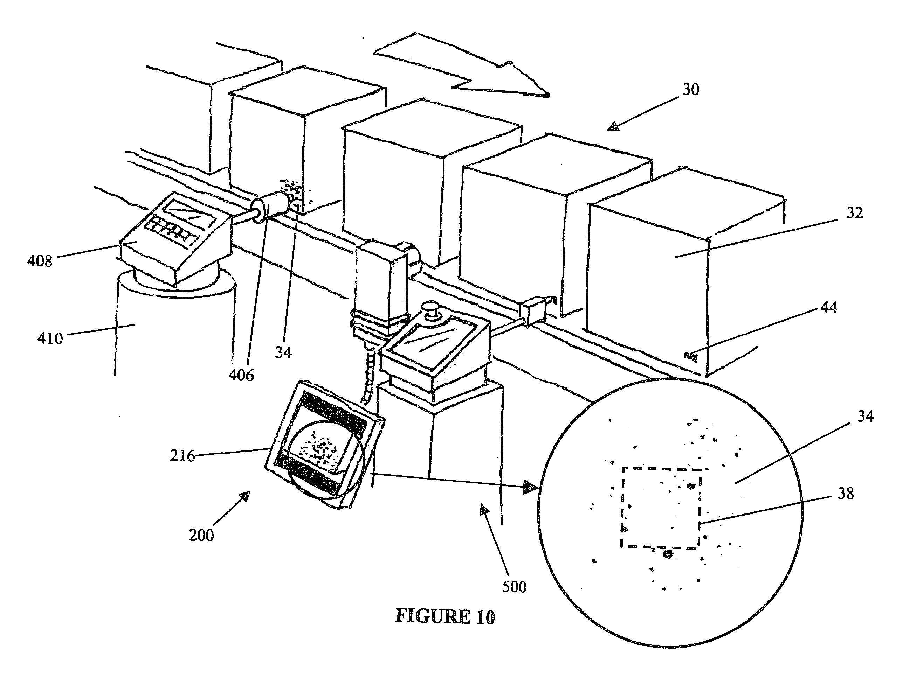

**Figure 10** shows another apparatus for applying a machine readable code 24 and unique coding dots 34 to the surface 12 of an article 10. It is the same as the apparatus in Figure 9 except the coding dots 34 are applied first, then encoded and assigned data and then the barcode 24 is applied. The barcode may be based on some data derived from or assigned to a portion of the coding dots 34 or the co-ordinates of a virtual code window.

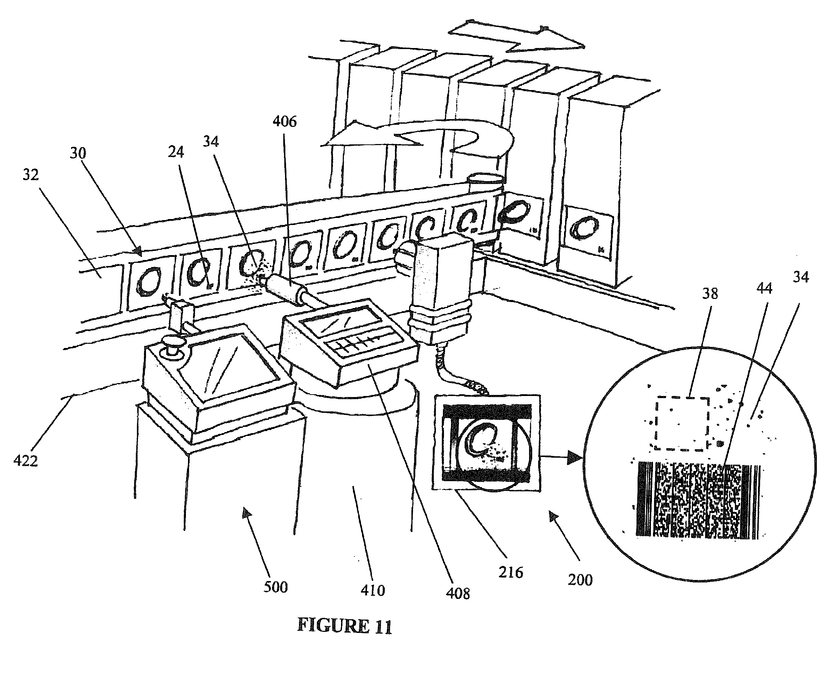

**Figure 11** shows yet another apparatus for applying a machine readable code 24 and unique coding dots 34 to the surface 12 of an article 10. The apparatus is identical to that shown in Figure 9 except the articles 10 are self-adhesive labels which are then applied to the surface of another article.

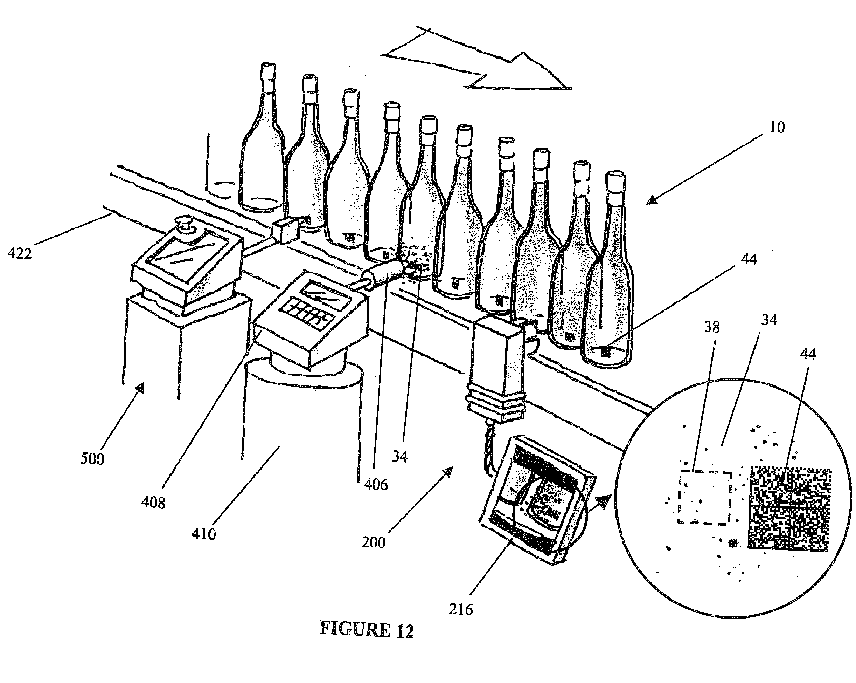

**Figure 12** shows a further apparatus for applying a machine readable code 24 and unique coding dots 34 to the surface 12 of an article 10. This is the same as the apparatus shown in Figure 9 except that the articles are bottles.

The inks used in the processes described above may be tagged inks which may comprise luminescent and/or phosphorescent compounds or filters such as UV blockers.

## Claims

1. A machine readable code comprising at least a portion of a graphical indicium, the graphical indicium comprising a random arrangement of spots applied by spraying.

2. A code according to claim 1, wherein at least some of the spots comprising the graphical indicium have a dimension of less than one micrometre.

3. A code according to claim 1 or 2, wherein the spots comprising the graphical indicium vary in size and/or shape.

4. A code according to any preceding claim, wherein the portion of the graphical indicium comprising the code is delimited by a temporary boundary that is generated by a reading machine relative to a fixed trigger point only when the code is being read.

5. A code according to any of claims 1 to 3, wherein the portion of the graphical indicium comprising the code is delimited by a graphically represented boundary.

6. A method of associating data with an article comprising the steps of:
applying a graphical indicium comprising a random arrangement of spots to the article by spraying;
acquiring electronically an image of at least a portion of the graphical indicium;
processing the acquired image to produce a descriptor;
assigning data to the descriptor; and,
storing the association in a storage means.

7. A method according to claim 6, wherein the graphical indicium is applied directly to the surface of the article.

8. A method according to claim 6, wherein the graphical indicium is applied to a substrate which is applied to the surface of the article.

9. A method according to any of claims 6 to 8, wherein a portion of the acquired image of the graphical indicium is processed to produce the descriptor.

10. A method according to claim 9, wherein the portion is delimited by a temporary boundary that is generated by the machine relative to a fixed trigger point only when the graphical indicium is being processed.

11. An apparatus for associating data with an article comprising:
an application unit comprising a spray nozzle for applying by spraying a graphical indicium comprising a random arrangement of spots to the article;
a camera for acquiring electronically an image of at least a portion of the graphical indicium;
a processor for processing the acquired image to produce an alphanumeric descriptor;
an assignment means for assigning data to the alphanumeric descriptor; and,
a storage means for storing the association.

12. An apparatus according to claim 11, further including a window calculation unit for defining a portion of the graphical indicium to be processed by the processor.

13. An apparatus according to claim 12, further including a detection unit for detecting a fixed trigger point for defining the position of the portion of the graphical indicium relative to it.
